# EUROPÄISCHE PATENTSCHRIFT

(11) **EP 0 651 939 B1**
(45) Veröffentlichungstag und Bekanntmachung des Hinweises auf die Patenterteilung: **17.03.1999**
(21) Anmeldenummer: 94116786.8
(22) Anmeldetag: 25.10.1994
(51) Int. Cl.: A01F 15/10, A01D 89/00

(54) **Abstreifer einer Fördervorrichtung einer Erntemaschine**
Stripper of a (pick-up) conveying device of a harvesting machine
Strippeur pour dispositif convoyeur sur une moissonneuse

(30) Priorität: 09.11.1993 US 150629
(43) Veröffentlichungstag der Anmeldung: 10.05.1995
(73) Patentinhaber: Deere & Company, Moline, Illinois 61265-8098 (US)
(72) Erfinder: Frimml, Roger William, Ottumwa, Iowa 52501 (US); Rumph, George William, Bloomfield, Iowa 52537 (US)
(74) Vertreter: Feldmann, Bernhard

(56) Entgegenhaltungen:
- DE-A- 3 336 443
- US-A- 2 256 829
- US-A- 2 732 678
- US-A- 4 766 717

## Beschreibung

Die Erfindung betrifft einen Abstreifer einer Fördervorrichtung einer Erntemaschine mit einem aufnahmeseitig gelegenen Frontbereich mit bogenförmigem Verlauf und einem oberen Schenkel, auf dem das Fördergut entlang gleitet.

Landwirtschaftlich nutzbare Maschinen, insbesondere Erntemaschinen wie Ballenpressen, Feldhäcksler, Mähdrescher und dergleichen, sind vielfach mit Fördervorrichtungen versehen, mit deren Hilfe auf dem Boden meist in Schwaden abgelegtes Erntegut wie Gras, Heu, Getreide und dergl. aufgenommen und einer Weiterbearbeitungsvorrichtung aufgegeben wird. Hierzu ist herkömmlich ein mit mehreren parallelachsig zueinander verlaufenden Zinkenwellen bestückter Rotor vorgesehen, auf dem Federzinken zum Eingriff in das zu fördernde Erntegut befestigt sind. Die Zinken der Federzinken erstrecken sich jeweils in voneinander beabstandeten vertikalen Ebenen, an die sich seitlich Abstreifer anschließen, auf denen das Erntegut z. B. zur Preßkammer gleitet und die das Erntegut von den Zinken abstreifen, wenn sich diese wieder zur Gutaufnahmestelle bewegen. Herkömmliche Abstreifer sind im wesentlichen U-förmig ausgebildet, wobei die Schenkel oben und unten und der gebogene Steg an der Gutaufnahmestelle vorgesehen sind. Zur einwandfreien Gutabgabe wird die Stellung der Zinken gesteuert, so daß sie sich an der Gutabgabestelle nahezu senkrecht aus der Fördergutmatte zurückziehen (US-A-3,397, 527).

Derartige Fördervorrichtungen sind nachteilig, weil die Steuerung der Federzinken insbesondere bei einer Steuerung der Zinkenwellen über Rollen und eine Rollenbahn Kosten verursacht und Relativbewegungen erfordert, die zu Verschleiß führen.

Andererseits zeigt die US-A-2,732,678 eine Fördervorrichtung einer Erntemaschine, z. B. eines Feldhäckslers, die drei in einem Dreieck angeordnete Rollen aufweist, um die mit seitlichem Abstand zueinander eine Vielzahl von Riemen über die gesamte Breite der Fördervorrichtung verteilt geschlungen sind. Zwischen den Riemen erstrecken sich Zinken, die auf einer um zwei der Wellen geschlungenen Kette befestigt sind und deren Spitzen eine ovale Bahn beschreiben. Das obere Trum der Kette verläuft unter einem spitzen Winkel zu dem oberen Trum der Riemen, so daß sich die Zinken ausgehend von einer Aufnahmestelle mehr und mehr hinter die Riemen zurückziehen und sich nach ca. drei Viertel der Erstreckung des oberen Trums der Riemen hinter diese zurückziehen, die somit als Abstreifer dienen. Das verbleibende Viertel des Wegs wird das Erntegut von dem jeweils nachfolgenden Erntegut bis zu einer Abgabestelle geschoben.

Diese Fördervorrichtung ist ebenfalls nachteilig, weil die Verwendung von Riemen sehr teuer ist und bei ungünstigen Förderbedingungen, wie Einwirkung von Schmutz, Wasser und starrem Fördergut, eine sichere Gutförderung nicht gewährleisten kann. Insbesondere aber fehlt eine positive Förderung des Ernteguts auf dem letzten Viertel des oberen Trums der Riemen.

Die DE-A-3 336 443 zeigt einen Abstreifer, dessen oberen Schenkel gerade und in der Förderrichtung ansteigend ist.

Die der Erfindung zugrundeliegende Aufgabe wird darin gesehen, einen Abstreifer vorzuschlagen, mit dessen Hilfe eine kostengünstige Herstellung einer Fördervorrichtung möglich ist und der insbesondere bei der Verwendung in einer Rundballenpresse einen hervorragenden Gutübergang an der Abgabestelle gewährleistet.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind. Darüberhinaus wird in Patentanspruch 4 eine besonders günstige Anordnung derartiger Abstreifer in einer Erntemaschine gelehrt.

Auf diese Weise kann bei Verwendung des auf einfache Weise aus Blech oder Kunststoff herstellbaren Abweisers ein Förderzinkenaufbau verwendet werden, der bei entsprechender Zuordnung der Abstreifer zu dem Förderzinkenaufbau die auf einer Kreisbahn bewegten Zinken hinter die Abstreifer zurückzieht, ohne daß es gesteuerter Zinken bedarf. Da - anders als bei den Riemen aus dem Stand der Technik - eine obere Welle nicht erforderlich ist, können die Zinken bis an das Ende des Förderwegs reichen und somit eine optimale Förderwirkung erbringen.

Eine störungsfreie Gutbewegung auf der Oberfläche der Abstreifer tritt ein, wenn der gerade erste Abschnitt tangential an den Frontbereich anschließt und/oder der zweite Abschnitt tangential an den geraden ersten Abschnitt anschließt.

Eine im Hinblick auf die Förderwirkung optimale und für eine sichere Anbringung geeignete Ausbildung des Abstreifers ist gegeben, wenn sich gegenüber dem oberen Schenkel an den Frontbereich ein unterer Schenkel anschließt, der zu dem oberen Schenkel in Förderrichtung divergierend verläuft, so daß beide Schenkel an einem Rahmen befestigbar sind.

Derart optimal ausgebildete Abstreifer können auch nachträglich an bestehende Fördervorrichtungen angebaut werden.

In einer Rundballenpresse, insbesondere mit einer unten offenen Preßkammer von im Querschnitt keilförmigem Profil bei leerer Preßkammer, ist die Gutförderung von einem Schwad zu der Preßkammer bei der Kernbildung des Ballens von größter Bedeutung. Es ist deshalb ein entscheidender Fortschritt, wenn eine Erntemaschine in der Art einer Rundballenpresse mit einer Fördervorrichtung zur Aufnahme von Erntegut vom Boden und dessen Weitergabe an eine Preßkammer, die um eine Achse rotierende Federzinken und Abstreifer aufweist, die zwischen sich einen Spalt belassen, durch den Zinken der Federzinken bewegt werden, dadurch gekennzeichnet ist, daß die Abstreifer nach der vorherigen Lehre ausgebildet sind.

Die Anordnung der Fördervorrichtung mit den erfindungsgemäßen Abstreifern gegenüber einer unteren und die Preßkammer normalerweise nach unten begrenzenden Rolle derart, daß ein Zwischenraum entsteht, bewirkt, daß das Fördergut dort unmittelbar in Kontakt mit der Rolle bzw. den über sie ablaufenden Riemen kommt und somit eine Zwangsführung in den Spalt zwischen den bereits gebildeten Ballen und den Riemen erfährt.

Die Ausrichtung der Riemenlauffläche und der Oberfläche des geraden ersten Abschnitts derart, daß sie stets einen stumpfen Winkel einschließen, bewirkt, daß das Fördergut bereits eine Bewegungskomponente erfährt, die der der Riemen entspricht, so daß eine Gutumlenkung nur geringfügig auftritt - der Materialfluß wird demnach nicht gestört.

Unter den vielen Arten, die Federzinken auf einem rotierenden Träger zu befestigen, hat sich diejenige als besonders kostengünstig und störungsunanfällig erwiesen, bei der die Federzinken auf Zinkenstangen gehalten sind, die sich parallel zu einer Antriebswelle des Federzinkenaufbaus erstrekken, an einer Einstellplatte gehalten sind und mit der Antriebswelle rotieren.

Eine koaxiale Anordnung der Antriebswelle des die Federzinken tragenden Rotors in bezug auf das Krümmungszentrum der Abstreifer hat den Vorteil, daß die Zinken auf diesem Teilwegstück in gleichem Maß in die Gutmatte eindringen und somit das Gut zuverlässig fördern.

Zur Anpassung der Fördervorrichtung an die jeweiligen Gutbedingungen ist es sinnvoll, eine Zinkenverstellmöglichkeit vorzusehen, bei der die Federzinken insbesondere über eine exzentrische Anordnung der Zinkenstangen an der Einstellplatte in verschieden geneigte Stellungen bringbar sind.

Eine Anordnung der Abstreifer gegenüber den Federzinken bzw. der sie tragenden Einstellplatte derart, daß sich ihre Zinken im Frontbereich nahezu vollständig außerhalb und im Bereich des zweiten bogenförmigen Abschnitts innerhalb oder im wesentlichen innerhalb der Abstreifer erstrecken, gewährleistet eine sichere Gutaufnahme einerseits und eine sichere Gutabgabe, ohne daß das Fördergut zwischen den Zinken und den Abstreifern eingeschlossen wird, andererseits.

Wenn sich die Oberseite des geraden ersten Abschnitts tangential zu der unteren Rolle der Preßkammer erstreckt, um die die Riemen geführt sind, wird das angeförderte Erntegut oberhalb dieser Rolle auf die Riemen treffen und diese zum Auslenken bewegen, so daß die Bildung eines Ballenkerns unverzüglich erfolgen kann.

In der Zeichnung ist ein in der Beschreibung nachfolgend näher beschriebenes Ausführungsbeispiel der Erfindung dargestellt. Es zeigt:
- Fig. 1: eine erfindungsgemäße Erntemaschine in Seitenansicht und
- Fig. 2: eine Fördervorrichtung der Erntemaschine mit erfindungsgemäßen Abstreifern in vergrößerter Darstellung und in Seitenansicht.

Zu Anfang ist zu bemerken, daß verschiedene Komponenten paarweise vorhanden sind, wobei nur ein Teil jedes Paares dargestellt wird. Die nicht gezeigte Komponente ist hierbei von gleicher oder ähnlicher Bauart, wie die gezeigte.

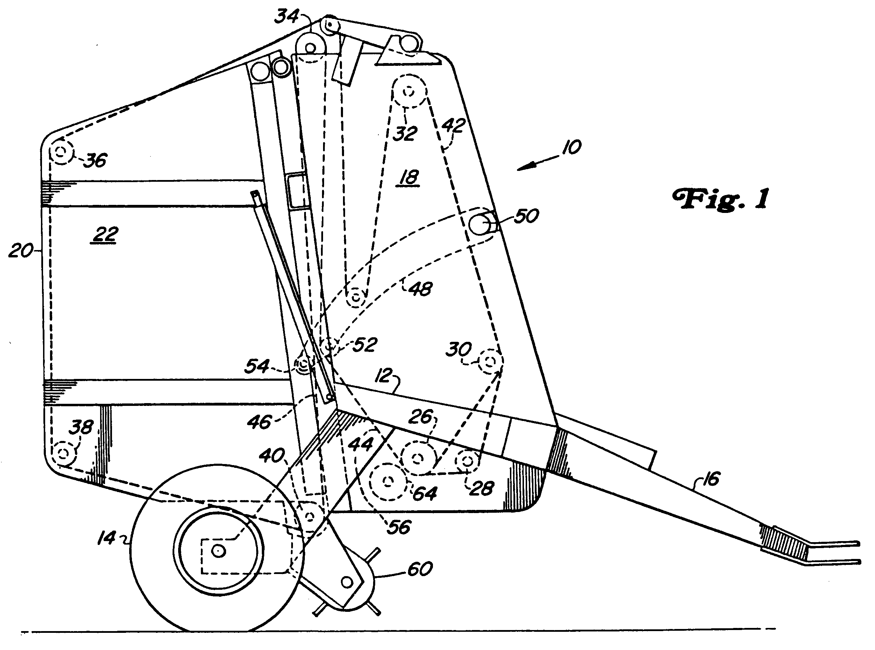

In Figur 1 wird eine Erntemaschine 10 zur Herstellung großer zylindrischer Ballen 62 gezeigt, die üblicherweise als Rundballenpresse bezeichnet wird. Die Erntemaschine 10 beinhaltet einen Hauptrahmen 12, der von einem Paar Räder 14 getragen wird, und eine Deichsel 16, die daran befestigt ist und dazu dient, die Erntemaschine 10 mit einem Ackerschlepper zu verbinden. Ein Paar in Querrichtung einen Abstand aufweisender, vertikaler Seitenwände 18 ist am Hauptrahmen 12 angebracht und hat jeweils aufrechte rückwärtige Enden. Ein Ballenaustrittstor 20 beinhaltet gegenüberliegende Seitenwände 22 und ist bei 24 an oberen rückwärtigen Stellen der Seitenwände 18 vertikal schwenkbar befestigt. Die vorderen Enden der Seitenwände 22 stoßen an die rückwärtigen Enden der Seitenwände 18, wenn das Ballenaustrittstor 20, wie dargestellt, in eine geschlossene Stellung abgesenkt wird.

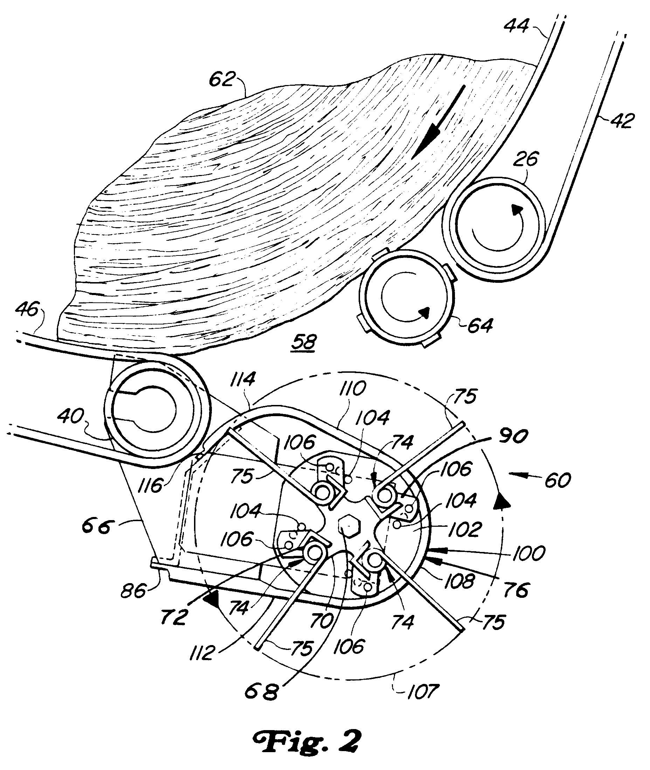

Die Paare der Seitenwände 18 und 22 tragen drehbar die gegenüberliegenden Enden einer Mehrzahl von ballenformenden Riemenlaufrollen, die an die Randzone der Seitenwände 18 und 22 angrenzen. Im wesentlichen sind beginnend an einer unteren zentralen Stelle der Seitenwände 18 und gegen den Uhrzeigerdrehsinn verlaufend, eine angetriebene Rolle 26, eine untere vordere Rolle 28, eine mittlere vordere Rolle 30, eine obere vordere Rolle 32 und eine obere rückwärtige Rolle 34 montiert. Weiter sind von einem oberen rückwärtigen Punkt der Seitenwände 22 gegen den Uhrzeigerdrehsinn eine obere rückwärtige Rolle 36, eine niedrigere rückwärtige Rolle 38 und eine untere vordere Rolle 40 angebracht. Eine Mehrzahl endloser ballenformender Riemen 42 überspannt mit Abstand voneinander den Raum zwischen den gegenüberliegenden Paaren der Seitenwände 18 und 22. Außer einigen der Riemen 42, die über die untere vordere Rolle 28 laufen, sind die Riemen 42 so ausgerichtet, daß sie nacheinander über die Rollen 26, 28, 30, 32, 36, 38, 40 und 34 laufen. Ein vorderer Abschnitt 44 der Riemen 42 erstreckt sich aufwärts von der angetriebenen Rolle 26 zur Rolle 34. Ein rückwärtiger Abschnitt 46 der Riemen 42 erstreckt sich in gleicher Weise von der unteren vorderen Rolle 40 aufwärts zur Rolle 34. Zwischen den rückwärtigen Endpunkten eines Paares sich nach hinten erstreckender Spannarme 48, die vertikal schwenkbar an einer mittelhohen Stelle (bei 50) an der Vorderseite der Seitenwände 18 gelagert sind, sind mit geringem Abstand eine vordere und rückwärtige freilaufende Rolle 52 und 54 angebracht. Die vorderen und rückwärtigen Abschnitte 44 und 46 der Riemen 42 laufen jeweils oberhalb der angetriebenen Rolle 26 und der unteren Rolle 40 nach oben aufeinander zu und verlaufen zwischen den Rollen 52 und 54 in geringem Abstand zueinander, wobei der Abschnitt 44 eine rückwärtige Fläche der Rolle 52 und der Abschnitt 46 eine vordere Fläche der rückwärtigen Rolle 54 berührt. Die Abschnitte 44 und 46 bestimmen zusammen mit den Seitenwänden 18 und 22 eine Preßkammer 56, die oben durch die Rollen 52 und 54 begrenzt wird und im vertikalen Querschnitt von der Seite betrachtet keilförmig ausgebildet ist. Der Boden der Preßkammer 56 ist mit einem Einlaß 58 (siehe auch Fig. 2) versehen, der sich zwischen der angetriebenen Rolle 26 und der unteren vorderen Rolle 40 befindet. Erntegut wird mittels einer Fördervorrichtung 60 in den Einlaß 58 gefördert, um dort durch die Bewegung der vorderen und rückwärtigen Abschnitte 44 und 46 der Riemen 42 zu dem nur in Fig. 2 gezeigten Ballen 62 geformt zu werden, wobei diese so angetrieben werden, daß sie sich auf den Einlaß 58 zu bzw. von diesem weg bewegen. Zu Beginn ist hierbei auch eine Starterrolle 64 beteiligt, die drehbar an den Seitenwänden 18 neben der angetriebenen Rolle 26 angebracht ist und in derselben Richtung angetrieben wird wie diese, so daß sie das von der Vorderseite der Riemen 44 nach unten geförderte Erntegut abstreift. Wenn der Ballen 62 geformt ist, dehnt sich die Preßkammer 56 gegen eine Kraft aus, die in den Riemen 42 durch ein Spannsystem aufgebaut wird, das das Paar Spannarme 48 beinhaltet, das zusammen mit Federn und Hydraulikzylindern (nicht gezeigt) zwischen den Seitenwänden 18 und den Spannarmen 48 zum Widerstand gegen eine Aufwärtsbewegung der Spannarme 48 angebracht ist. Wenn der Ballen 62 eine bestimmte Größe erreicht, wird sein Gewicht hauptsächlich von der unteren Rolle 40, aber auch von der angetriebenen Rolle 26 und der Starterrolle 64 getragen.

Figur 2 zeigt, daß die Fördervorrichtung 60 einen Rahmen 66 besitzt, der schwenkbar am Hauptrahmen 12 angebracht ist, um eine Bewegung oder Justierung um eine Achse zu ermöglichen, die in diesem Fall mit der Rotationsachse der unteren Rolle 40 zusammenfällt. Der Rahmen 66 der Fördervorrichtung 60 wird im oberen Bereich seiner Bewegungs- oder Einstellmöglichkeiten gezeigt. Die Fördervorrichtung 60 beinhaltet eine zentrale Antriebswelle 68 mit hexagonalem Querschnitt, auf der ein Paar Armkreuze 70 an gegenüberliegenden Stellen fest angebracht ist. Die Armkreuze 70 haben jeweils vier gleichwinklig angeordnete Arme 90 und Zinkenstangen 72, die aus Winkeleisen gebildet werden, sich zwischen den beweglichen Armen 90 des Paares Armkreuze 70 erstrecken und daran durch nicht gezeigte zylindrische Stifte schwenkbar angebracht sind, die lösbar an gegenüberliegenden Seiten jeder Zinkenstange 72 befestigt sind und schwenkbar in Bohrungen in jedem Paar der Arme 90 aufgenommen werden. An jeder Zinkenstange 72 sind Federzinken 74 quer mit Abstand voneinander gesichert, wobei jedes einen gewendelten Innenteil, der an der Zinkenstange 72 befestigt ist, und ein Paar Zinken 75, die sich von gegenüberliegenden Enden des Innenteils erstrecken, besitzt. Jede Gruppe von vier Federzinken 74, die an derselben Stelle auf den vier Zinkenstangen 72 angebracht ist, hat erste und zweite Sätze in gleicher radialer Ebene liegender Zinken 75. Ein im wesentlichen U-förmiger Abstreiferzusammenbau 76 ist rückwärtig geöffnet und enthält separate Abstreifer 100 in der Form von Bändern, die sich zwischen jedem Satz koplanarer Zinken 75 jeder Gruppe von vier Federzinken 74 befinden, so daß zwischen benachbarten Abstreifern 100 Schlitze gebildet werden, um den freien Durchgang der Zinken 75 zu ermöglichen.

Die Fördervorrichtung 60 benutzt eine aufrechte Einstellplatte 102, die an der linken Seite des Rahmens 66 auf der Antriebswelle 68 befestigt ist und vier Sätze von jeweils drei Einstellbohrungen 104 enthält. Jeder Satz dreier Einstellbohrungen 104 ist entlang eines Radius' der betreffenden Bohrung eines der vier Arme 90 auf dem Armkreuz 70 angeordnet. Die Arme 90 weisen im Gegensatz zu manchem Stand der Technik keine darauf gelagerten Rollen auf, sondern haben statt dessen Haltebolzen 106, die auf den Armen 90 in einer ausgewählten Einstellbohrung 104 des Dreiersatzes gehalten sind. Wie es dargestellt ist, legt die jeweilige Einstellbohrung 104 die Zinkenstange 72 so fest, daß sich die Zinken 75 im wesentlichen radial zu der Achse der Antriebswelle 68 erstrecken, wobei die Spitzen der Zinken 75 einen kreisförmigen Pfad 107 beschreiben. Die Abstreifer 100 sind zwischen benachbarten Sätzen von vier sich in der gleichen Ebene erstreckenden Zinken 75 angeordnet, die quer und entlang der Zinkenstange 72 angeordnet sind. Mit Ausnahme des oberen Schenkels sind die Abstreifer 100 wie herkömmliche Abstreifer ausgebildet. Insbesondere in der Seitenansicht hat jeder Abstreifer 100 einen kreis- oder bogenförmigen Frontbereich 108, der auf einem Radius um die Antriebswelle 68 verläuft. Jedoch anstatt halbkreisförmig zu verlaufen, endet das obere Ende des Bogens ca. 20 Grad vor dem Ende eines gedachten Halbkreises. Der Abstreifer 100 hat einen oberen Schenkel mit einem geraden ersten Abschnitt 110, der in diesem Ausführungsbeispiel zu einem geraden unteren Schenkel 112 des Abstreifers 100 divergierend verläuft. Das rückwärtige Ende des Schenkels 112 ist bei 86 an den Rahmen 66 angeschraubt. An den geraden ersten Abschnitt 110 des oberen Schenkels des Abstreifers 100 angeschlossen und sich von diesem nach hinten und dann nach unten erstreckend ist ein bogenförmig gekrümmter zweiter Abschnitt 114 vorgesehen, dessen rückwärtiges Ende bei 116 an den Rahmen 66 angeschraubt ist. Wenn es auch nicht unbedingt so sein muß, so ist der bogenförmige zweite Abschnitt 114 entlang eines Radius' gebogen, der dem Radius des Frontbereichs 108 des Abstreifers 100 entspricht. Die Länge des geraden ersten Abschnitts 110 und die Krümmung des zweiten bogenförmigen zweiten Abschnitts 114 des oberen Schenkels des Abstreifers 100 sind derart gewählt, daß beim Drehen der Zinken 75 der Federzinken 74 an dem Einlaß 58 die geraden und bogenförmigen Abschnitte 110, 114 der Abstreifer 100 ein Abheben des Ernteguts von den Zinken 75 bewirken, wenn sich die Zinken 75 ungefähr bei ihrer 10-Uhr-Stellung vollkommen unter den oberen Schenkel zurückziehen.

Während der anfänglichen Bildung des Ballens 62 leitet der gerade erste Abschnitt 110 des oberen Schenkels des Abstreifers 100 die von den Zinken 75 getragene Gutmatte in den Bereich des rückwärtigen Abschnitts 46 der Riemen 42, der sich oberhalb der unteren vorderen Rolle 40 des Ballenaustrittstors 20 erstreckt. Aufgrund der aufwärts gerichteten Neigung des Frontbereichs 108 erfährt das Erntegut aufgrund des stumpfen Winkels zwischen dem rückwärtigen Abschnitt 46 und dem ersten geraden Abschnitt 110 eine wesentliche, nach oben gerichtete Bewegungskomponente, um dadurch die Mitnahmebewegung des Abschnitts 46 für das herangeführte Erntegut zu ergänzen, wodurch die Tendenz zu Verstopfungen und Wicklungen reduziert wird. Es wird des weiteren bemerkt, daß, sobald der Ballen 62 eine Größe erreicht hat, bei der er sich auf der Rolle 40 abstützt, die fest angeordneten radialen Zinken 75 kräftig Erntegut in den Spalt zwischen dem Ballen 62 und die Riemen 42 in dem Bereich, in dem sie mit der Rolle 40 in Eingriff treten, stopfen. Diese Funktion steht im Gegensatz zu der Funktion bisheriger Fördervorrichtungen.

Abgesehen von der funktionellen Verbesserung der fest angeordneten Zinken 75 ist es als vorteilhaft anzusehen, daß diese Ausführungsform wesentlich kostengünstiger ist als eine Ausführung, die Mitnehmerrollen und eine geschlossene Spur zur Führung der Mitnehmerrollen benötigt.

## Patentansprüche

1. Abstreifer (100) einer Fördervorrichtung (60) einer Erntemaschine (10) mit einem aufnahmeseitig gelegenen Frontbereich (108) mit bogenförmigem Verlauf und einem oberen Schenkel, der einen geraden in Förderrichtung ansteigenden ersten Abschnitt (110) enthält, auf dem das Fördergut entlang gleitet, dadurch gekennzeichnet, daß der obere Schenkel einen in Förderrichtung darauf folgenden bogenförmigen zweiten Abschnitt (114) enthält, der spiegelbildähnlich zu dem Frontbereich (108) verläuft.

2. Abstreifer (100) nach Anspruch 1, dadurch gekennzeichnet, daß der gerade erste Abschnitt (110) tangential an den Frontbereich (108) und/oder der zweite Abschnitt (144) tangential an den geraden ersten Abschnitt (110) anschließt.

3. Abstreifer (100) nach Anspruch 1 oder 2, dadurch gekennzeichnet, daß sich gegenüber dem oberen Schenkel an den Frontbereich (108) ein unterer Schenkel (112) anschließt, der zu dem geraden ersten Abschnitt (110) des oberen Schenkels in Förderrichtung divergierend verläuft.

4. Erntemaschine (10) in der Art einer Rundballenpresse mit einer Fördervorrichtung (60) zur Aufnahme von Erntegut vom Boden und dessen Weitergabe an eine Preßkammer (56), die um eine Achse rotierende Federzinken (74) und Abstreifer (100) aufweist, die zwischen sich einen Spalt belassen, durch den Zinken (75) der Federzinken (74) bewegt werden, dadurch gekennzeichnet, daß die Abstreifer (100) nach einem oder mehreren der Ansprüche 1 bis 3 ausgebildet sind.

5. Erntemaschine nach Anspruch 4, dadurch gekennzeichnet, daß sie eine untere Rolle (40) enthält, auf der sich ein aus dem Fördergut gebildeter Ballen (62) direkt oder über Riemen (42) abstützen kann und daß der bogenförmige zweite Abschnitt (114) derart an die Rolle (40) angrenzt, daß sich zwischen beiden ein das Fördergut in Anlage an der Rolle (40) haltender Zwischenraum ergibt.

6. Erntemaschine nach Anspruch 4 oder 5, dadurch gekennzeichnet, daß wenigstens ein beweglicher Riemen (42) vorgesehen ist, der das Fördergut von der Fördervorrichtung (60) annimmt und weiterbefördert, wobei die Riemenlauffläche und die Oberfläche des geraden ersten Abschnitts (110) stets einen stumpfen Winkel einschließen.

7. Erntemaschine nach einem oder mehreren der vorherigen Ansprüche, dadurch gekennzeichnet, daß die Federzinken (74) auf Zinkenstangen gehalten sind, die sich parallel zu einer Antriebswelle (68) der Federzinken (74) erstrecken, an einer Einstellplatte (102) gehalten sind und mit der Antriebswelle (68) rotieren.

8. Erntemaschine nach einem oder mehreren der vorherigen Ansprüche, dadurch gekennzeichnet, daß die Antriebswelle (68) koaxial zu der Krümmungsachse des Frontbereichs (108) angeordnet ist.

9. Erntemaschine nach Anspruch 7 oder 8, dadurch gekennzeichnet, daß die Federzinken (74) insbesondere über eine exzentrische Anordnung der Zinkenstangen an der Einstellplatte (102) in verschieden geneigte Stellungen bringbar sind.

10. Erntemaschine nach einem oder mehreren der vorherigen Ansprüche, gekennzeichnet durch eine Anordnung der Abstreifer (100) gegenüber den Federzinken (74) bzw. der sie tragenden Einstellplatte (102) derart, daß sich ihre Zinken (75) im Frontbereich (108) nahezu vollständig jenseits und im Bereich des zweiten bogenförmigen Abschnitts (114) diesseits oder im wesentlich diesseits der Abstreifer (100) erstrecken.

11. Erntemaschine nach einem oder mehreren der vorherigen Ansprüche, dadurch gekennzeichnet, daß die das Fördergut leitende Ebene des ersten geraden Abschnitts (110) tangential oder im wesentlichen tangential zu der Rolle (40) verläuft.

## Claims

1. A stripper (100) of a conveyor device (60) of a harvesting machine (10) with a front region (108) disposed on the receiving end with a curved shape and an upper limb which includes a straight first section (110) rising in the conveying direction, along which the conveyed material slides, characterized in that the upper limb includes a curved second section (114) following thereon in the conveying diretion, shaped like a mirror image of the front region (108).

2. A stripper (100) according to claim 1, characterized in that the straight first section (110) adjoins the front region (108) tangentially and/or the second section (144) adjoins the straight first section (110) tangentially.

3. A stripper (100) according to claim 1 or 2, characterized in that a lower limb (112) opposite the upper limb adjoins the front region (108) and runs divergently in the conveying direction relative to the first section (110) of the upper limb.

4. A harvesting machine (10) in the form of a round baler with a conveyor device (60) for receiving harvested material from the ground and passing it to a baling chamber (56), which comprises spring tines (74) rotating about an axis and strippers (100), which leave a gap therebetween, through which the tines (75) of the spring tines (74) are moved, characterized in that the strippers (100) are formed in accordance with one or more of claims 1 to 3.

5. A harvesting machine according to claim 4, characterized in that it includes a lower roller (40), on which a bale (62) formed from the harvested material can be supported directly or via belts (42), and in that the curved second section (114) so adjoins the roller (40) that a space holding the conveyed material in engagement with the roller (40) results therebetween.

6. A harvesting machine according to claim 4 or 5, characterized in that at least one movable belt (42) is provided, which receives the conveyed material from the conveyor device (60) and passes it on, wherein the belt surface and the surface of the straight first section (110) always include an obtuse angle.

7. A harvesting machine according to one or more of the preceding claims, characterized in that the spring tines (74) are retained on tine bars, which extend parallel to a drive shaft (68) of the spring tines (74), are held on an adjusting plate (102) and rotate with the drive shaft (68).

8. A harvesting machine according to one or more of the preceding claims, characterized in that the drive shaft (68) is coaxial with the axis of curvature of the front region (108).

9. A harvesting machine according to claim 7 or 8, characterized in that the spring tines (74) can be brought into differently inclined positions in particular by an eccentric arrangement of the tine bars on the adjusting plate (102).

10. A harvesting machine according to one or more of the preceding claims, characterized by an arrangement of the strippers (100) relative to the spring tines (74) or the adjusting plate (102) carrying them, such that their tines (75) extend in the front region (108) nearly completely beyond the strippers (100) and in the region of the second curved section (114) on the inside or substantially on the inside of the strippers (100).

11. A harvesting machine according to one or more of the preceding claims, characterized in that the plane of the first straight section (110) guiding the conveyed material runs tangentially or substantially tangentially to the roller (40).

## Revendications

1. Racloir (100) d'un dispositif de convoyage (60) d'une moissonneuse (10), comportant une partie avant (108) disposée sur le côté réception et possédant une forme en arc de cercle et une branche supérieure, qui contient une première partie rectiligne (110) qui remonte dans la direction de convoyage et le long de laquelle la matière convoyée glisse, caractérisé en ce que la branche supérieure contient une seconde partie en forme d'arc de cercle (114), qui s'étend en aval de la première partie dans la direction de convoyage, d'une manière symétrique par rapport à la partie avant (108).

2. Racloir (100) selon la revendication 1, caractérisé en ce que la première partie rectiligne (110) se raccorde tangentiellement à la partie avant (108) et/ou que la seconde partie (144) se raccorde tangentiellement à la première partie rectiligne (110).

3. Racloir (100) selon la revendication 1 ou 2, caractérisé en ce qu'à l'opposé de la branche supérieure, à la partie avant (108) se raccorde une branche inférieure (112) qui s'étend dans une position divergente, dans la direction de convoyage, par rapport à la première partie (110) de la branche supérieure.

4. Moissonneuse (10) agencée à la manière d'une presse à balles cylindriques comportant un dispositif de convoyage (60) servant à recevoir la matière à récolter à partir du sol et à transférer cette matière récoltée jusqu'à une chambre de presse (56), qui possède des dents à ressort (74) tournant autour d'un axe et des racloirs (100), les dents et les racloirs laissant subsister entre eux une fente, dans laquelle les dents (75) des dents de ressort (74) sont déplacées, caractérisée en ce que les racloirs (100) sont agencés conformément à une ou plusieurs des revendications 1 à 3.

5. Moissonneuse selon la revendication 4, caracterisée en ce qu'elle contient un rouleau inférieur (40), sur lequel une balle (62) formée de la matière à convoyer peut prendre appui directement ou par l'intermédiaire de courroies (42), et que la seconde partie en forme d'arc de cercle (114) est contigue au rouleau (40) de telle sorte qu'il existe entre ces deux parties un espace intercalaire qui retient la matière à convoyer appliquée contre le rouleau (40).

6. Moissonneuse selon la revendication 4 ou 5, caracterisée en ce qu'il est prévu au moins une courroie mobile (42), qui reçoit la matière à convoyer de la partie du dispositif de convoyage (60) et continue à l'entraîner, la surface de circulation de la courroie et la surface de la première partie rectiligne (110) faisant en permanence un angle obtus.

7. Moissonneuse selon une ou plusieurs des revendications précédentes, caractérisée en ce que les dents à ressort (74) sont retenues sur des barres porte-dents, qui s'étendent parallèlement à un arbre d'entraînement (68) des dents à ressort (74), sont retenues sur une plaque de réglage (102) et tournent avec l'arbre d'entraînement (68).

8. Moissonneuse selon une ou plusieurs des revendications précédentes, caractérisée en ce que l'arbre d'entraînement (68) est disposé coaxialement par rapport à l'axe de courbure de la partie avant (108).

9. Moissonneuse selon la revendication 7 ou 8, caractérisée en ce que les dents à ressort (74) peuvent être amenées dans différentes positions inclinées, notamment par l'intermédiaire d'un montage excentré des barres à dents sur la plaque de réglage (102).

10. Moissonneuse selon une ou plusieurs des revendications précédentes, caractérisée par un montage des racloirs (100) par rapport aux dents à ressort (74) ou à la plaque de réglage (102) portant ces dents, de telle sorte que dans la partie avant (108) leurs dents (75) s'étendent presque complètement de l'autre côté des racloirs (100) et, dans la zone de la seconde partie en forme d'arc de cercle (114), s'étendent en-deçà ou essentiellement en-deçà des racloirs (100).

11. Moissonneuse selon une ou plusieurs des revendications précédentes, caractérisée en ce que le plan, qui guide la matière à convoyer, de la première partie rectiligne (110) s'étend tangentiellement ou essentiellement tangentiellement au rouleau (40).
